# EUROPÄISCHE PATENTSCHRIFT

(11) **EP 2 955 069 B1**
(45) Veröffentlichungstag und Bekanntmachung des Hinweises auf die Patenterteilung: **19.04.2017**
(21) Anmeldenummer: 15167377.9
(22) Anmeldetag: 12.05.2015
(51) Int. Cl.: B60S 1/08, B60S 1/48, B60S 1/52, B60S 1/54, B60S 1/56, G02B 27/00

(54) **KAMERAEINHEIT MIT EINER REINIGUNGSVORRICHTUNG**
CAMERA UNIT WITH A CLEANING DEVICE
UNITÉ DE CAMÉRA DOTÉE D'UN DISPOSITIF DE NETTOYAGE

(30) Priorität: 11.06.2014 DE 102014008242
(43) Veröffentlichungstag der Anmeldung: 16.12.2015
(73) Patentinhaber: Huf Hülsbeck & Fürst GmbH & Co. KG, 42551 Velbert (DE)
(72) Erfinder: Buss, Wolfgang, 42697 Solingen (DE); Buschmann, Gerd, 42553 Velbert (DE)

(56) Entgegenhaltungen:
- GB-A- 1 236 027
- US-A1- 2013 092 758

## Beschreibung

Die Erfindung betrifft eine Kameraeinheit zur bildlichen Erfassung eines Außenbereichs für ein Kraftfahrzeug mit einer zum Reinigen der Kameraeinheit vorgesehenen Reinigungsvorrichtung. Die US 2013/0092758 A1 offenbart eine solche Kameraeinheit. Aus dem Stand der Technik ist eine Kameraeinheit bekannt, der eine Reinigungsvorrichtung zugeordnet ist. Die Reinigungsvorrichtung wird dabei durch einen schwenkbeweglichen Wischer gebildet, welcher die Linse der Kameraeinheit direkt reinigt. Nachteilig ist an dieser Lösung, dass der konstruktive Aufbau sehr kompliziert ist und der Wischer nach mehrmaligem Gebrauch ausgetauscht werden muss.

Daher ist die Aufgabe der Erfindung, eine Kameraeinheit mit einer Reinigungsvorrichtung bereitzustellen, welche einen einfachen und kostengünstigen konstruktiven Aufbau aufweist.

Die Aufgabe der Erfindung wird dadurch gelöst, dass die Reinigungsvorrichtung umfasst:
- ein Stellglied zum Antreiben eines beweglichen Bauteils, insbesondere eines Kolbens,
- eine Kammer zur Aufnahme des beweglichen Bauteils, wobei der Kammer mindestens ein Zulauf und mindestens ein Ablauf zugeordnet ist, welcher jeweils mit einem Rückschlagventil versehen ist,
- eine mit mindestens einem Ablauf verbundenes Reinigungselement, insbesondere Reinigungsdüse, zur Beaufschlagung der Kameraeinheit mit einem Fluid,
wobei durch die Bewegung des beweglichen Bauteils das Fluid von dem Zulauf zu dem Ablauf beförderbar ist, um die Kameraeinheit mit dem Reinigungselement zu reinigen.

Die Kameraeinheit mit der Reinigungsvorrichtung weist den Vorteil auf, dass einfache konstruktive Mittel genügen, um die Kameraeinheit, insbesondere die Linse zu reinigen. Das grundsätzliche Prinzip, um das Fluid zur Linse zu befördern, ähnelt der Funktion einer Luftpumpe. Das Fluid wird mit Hilfe des beweglichen Bauteils, welches als Kolben oder Schnecke ausgebildet ist, über einen Zulauf in die Kammer angesaugt und über den Ablauf zur Reinigungsvorrichtung befördert bzw. gepumpt. Es wird lediglich noch ein Stellglied benötigt, welches das bewegliche Bauteil in Bewegung versetzt. Die Rückschlagventile, welche beispielsweise in oder vor, insbesondere elastisch ausgebildeten, Zu- und/oder Ablaufleitungen angeordnet sein können, sorgen dafür, dass beim Ansaugen oder Befördern des Fluids, das Fluid entweder nur aus der Kammer heraus oder in die Kammer hinein geführt werden kann. Ein gleichzeitiges Ansaugen und Befördern bzw. Abpumpen desselben Fluids in einem in sich geschlossenem Kammerabschnitt der Kammer wird durch das bewegliche Bauteil somit ausgeschlossen, so dass die zuverlässige und akkurate Reinigung der Kameraeinheit, insbesondere der Linse stets gewährleistet ist. Durch dieses mechanische Prinzip werden die Konstruktionskosten der Kameraeinheit und der Reinigungsvorrichtung in vorteilhafterweise verringert. Ebenfalls ist das System im Vergleich zum Stand der Technik wartungsfrei ausgebildet. Es müssen keine Wischer oder dergleichen nach einem mehrmaligen Gebrauch ausgetauscht werden. Nach einer bevorzugten Ausführungsform der Kameraeinheit ist vorgesehen, dass durch die Bewegung des beweglichen Bauteils in der Kammer ein Unterdruck erzeugbar ist, welcher das Fluid über mindestens einen Zulauf in die Kammer ansaugt und bei einer nachfolgenden Bewegung des beweglichen Bauteils das Fluid aus der Kammer über den Ablauf zu dem Reinigungselement befördert, um die Kameraeinheit, insbesondere eine Linse der Kameraeinheit, mit dem Fluid zu beaufschlagen. Durch diese Maßnahme wird sichergestellt, dass immer genügend Fluid, insbesondere Wasser oder Luft in der Kammer zur Verfügung steht, um die Reinigung der Kameraeinheit durchzuführen.

Nach einer bevorzugten Ausführungsform der Kameraeinheit ist vorgesehen, dass das Stellglied als Elektromotor oder Aktuator ausgebildet ist. Der Elektromotor ist kostengünstig in seiner Herstellung und benötigt aufgrund seiner kompakten Bauweise nur einen sehr geringen Bauraum.

Nach einer weiteren bevorzugten Ausführungsform ist vorgesehen, dass die Reinigungsvorrichtung mit der Kameraeinheit verbunden, insbesondere verschraubt ist. Somit ist es möglich ein kompaktes Kameramodul zu bilden, welches die Kameraeinheit und die Reinigungsvorrichtung umfasst. Die Kameraeinheit umfasst mindestens ein Kameragehäuse, eine Kamera aufweisend eine Linse und eine Kameraelektronikeinheit zur Bearbeitung der Bilder. Die Reinigungsvorrichtung umfasst mindestens eine als Reinigungselement ausgebildete Reinigungsdüse, welche mit einer Kammer zur Aufnahme des Fluids verbunden ist. Das Kameragehäuse selber kann ebenfalls dazu ausgebildet sein, ein Betätigungselement zum Einleiten einer Schließ- und/oder Öffnungsbewegung einer Klappe des Kraftfahrzeugs aufzunehmen. Die Kamera aufweisend die Linse ist dann neben dem beispielsweise als mechanischen oder kapazitiven Taster ausgebildeten Betätigungselement angeordnet. Alternativ ist es ebenfalls möglich, die Kameraeinheit separat von der Reinigungsvorrichtung anzuordnen.

Die Kosten zu Herstellung der Kameraeinheit werden reduziert, wenn das Reinigungselement unbeweglich an einem Gehäuse der Kameraeinheit angeordnet ist. Es ist ebenfalls denkbar, das Reinigungselement hinter einer Schutzklappe anzuordnen, welche bei Bedarf verfahrbar ist, um das Reinigungselement freizugeben.

Auch ist es alternativ möglich, dass Reinigungselement verfahrbar auszubilden, so dass es in einen dafür vorgesehen Bauraum in der Kameraeinheit oder in der Karosserie gefahren werden kann. Dadurch wird das Reinigungselement selbst gegen Verschmutzungen geschützt, wenn es in einem geschützten Bereich des Fahrzeugs angeordnet ist. Zum Bewegen des Reinigungselements kann das bereits vorhandene Stellglied zur Bewegung des beweglichen Bauteils, insbesondere des Kolbens verwendet werden, oder aber auch ein separates Stellglied verwendet werden.

Nach einer weiteren bevorzugten Ausführungsform der Kameraeinheit ist vorgesehen, dass die Kammer einen ersten Zulauf für ein erstes Fluid, insbesondere Luft, und einen zweiten Zulauf für ein zweites Fluid, insbesondere Wasser, aufweist sowie einen ersten Ablauf für das erste Fluid und einen zweiten Ablauf für das zweite Fluid aufweist. Durch diese Maßnahme wird ermöglicht, dass die Kameraeinheit sowohl mit Luft als auch mit Wasser gereinigt werden kann. Dabei ist vorzugsweise zuerst die Kameraeinheit mittels des Reinigungselements mit Wasser zu beaufschlagen bzw. zu besprühen und danach mit Luft zu beströmen. Somit können auf der Kameraeinheit vorhandene Tropfen oder Nässe mit der aus dem Reinigungselement ausströmenden Luft beseitigt werden. Die aufgenommen Bilder werden dadurch klarer, deutlicher und exakter auf einem dem Kraftfahrzeug zugeordnetem Bildschirm dargestellt.

Die Kameraeinheit wird durch lediglich zwei Hübe des beweglichen Bauteils zuverlässig gereinigt und getrocknet, wenn das bewegliche Bauteil zwischen einer ersten Stellung, insbesondere Ruhestellung, und einer zweiten Stellung, insbesondere Reinigungsstellung, bewegbar ausgebildet ist, wobei bei der Bewegung von der ersten Stellung in die zweite Stellung das erste Fluid, insbesondere Wasser, über den zweiten Ablauf zum Reinigungselement beförderbar ist und über den ersten Zulauf das zweite Fluid, insbesondere Luft, ansaugbar ist und bei der Bewegung des beweglichen Bauteils von der zweiten Stellung in die erste Stellung das erste Fluid, insbesondere Wasser, über den zweiten Zulauf ansaugbar ist und über den ersten Ablauf das zweite Fluid, insbesondere Luft, zum Reinigungselement beförderbar ist, um die Kameraeinheit, insbesondere die Linse zu trocknen. Aufgrund dieser Maßnahme kann auf eine zusätzliche kostenintensive Trocknungsvorrichtung verzichtet werden, weil die Reinigungsvorrichtung zwei Funktionen, und zwar Reinigen und Trocknen, in einer einzigen Vorrichtung bereitstellt.

Der konstruktive Aufbau wird vereinfacht, wenn der erste Ablauf, insbesondere eine erste Ablaufleitung aufweist und der zweite Ablauf, insbesondere eine zweite Ablaufleitung aufweist, wobei die erste Ablaufleitung und die zweite Ablaufleitung hinter den jeweiligen Rückschlagventilen miteinander verbunden sind und einen Gesamtablauf, insbesondere Gesamtablaufleitung, bilden, der mit dem Reinigungselement verbunden ist. Somit muss nur eine einzige Leitung an das Reinigungselement angeschlossen werden. Folglich muss nur ein einziger Anschluss an dem Reinigungselement vorgesehen werden. Die Montagezeit für die Reinigungsvorrichtung wird verkürzt, weil weniger konstruktive Teile bei der Reinigungsvorrichtung und/oder Kameraeinrichtung montiert werden müssen.

Zur kompakten Unterbringung der Kameraeinheit und der Reinigungsvorrichtung ist vorgesehen, dass die Zulaufleitung und/oder die Ablaufleitung und/oder der Ablauf und/oder der Zulauf aus einem elastischen Material ausgebildet sind. Durch diese Ausbildung kann in vorteilhafterweise die Kammer und das Reinigungselement beabstandet zueinander angeordnet werden. Folglich ist es möglich, die Kammer direkt auf der Rückseite des Gehäuses der Kameraeinheit anzuordnen, und die elastische bzw. flexible, vorzugsweise die aus einem Elastomer, insbesondere aus Gummi ausgebildete Leitung zu einem von der Kammer beabstandeten Reinigungselement zu führen oder zu biegen.

Um den Reinigungsvorgang der Kameraeinheit zu beschleunigen, ist vorgesehen, dass vor Beginn des Reinigungsvorgangs der Kameraeinheit die Kammer immer zumindest teilweise mit Wasser befüllt ist.

Um eine Vermischung von zwei Fluiden zu verhindern ist vorgesehen, dass das bewegliche Bauteil mit einem Dichtelement versehen ist, wobei das Dichtelement zwischen einer inneren Wandung der Kammer und einer Wandung des beweglichen Bauteils angeordnet ist. Eine Vermischung der beiden Fluide würde zu einem schlechten Reinigungsergebnis führen. Im Falle einer Trocknung des Reinigungselements wird bei einem fehlenden Dichtelement Luft mit einer relativ hohen Feuchtigkeit verwendet, so dass folglich eine Trocknung ausgeschlossen ist. Der Energieverbrauch der Reinigungsvorrichtung, insbesondere des als Elektromotor ausgebildeten Stellglieds bzw. Aktuators, wird verringert, wenn das beweglich Bauteil mit einem Federelement verbunden ist, um das beweglich Bauteil selbstständig durch das vorgespannte Federelement von der zweiten Stellung, insbesondere Reinigungsstellung, zurück in die erste Stellung, insbesondere Ruhestellung, zu bewegen.

Die Aufgabe der Erfindung wird durch ein Verfahren zum Reinigen einer Kameraeinheit zur bildlichen Erfassung eines Außenbereichs für ein Kraftfahrzeug gelöst, wobei der Kameraeinheit eine Reinigungsvorrichtung mit einem Reinigungselement zugeordnet ist, welche zur Reinigung der Kameraeinheit mit einem Fluid dient, wobei die Reinigungsvorrichtung ein Stellglied aufweist, welches ein bewegliches Bauteil, insbesondere einen Kolben, innerhalb einer mit mindestens einem Zulauf und mindestens einem Ablauf ausgebildeten Kammer der Reinigungsvorrichtung bewegt, wobei durch die Bewegung des beweglichen Bauteils das Fluid von dem Zulauf zu dem Ablauf bewegt wird, um die Kameraeinheit mit dem Reinigungselement zu reinigen und/oder zu trocknen.

Durch dieses Verfahren wird sichergestellt, dass die Kameraeinheit zuverlässig und kostengünstig gereinigt wird, ohne den konstruktiven Aufwand zu erhöhen.

Der Reinigungsvorgang der Kameraeinheit wird weiter verbessert, wenn bei der Bewegung des beweglichen Bauteils ein Fluid über den Zulauf angesaugt wird und bei einer zweiten Bewegung über den Ablauf zu dem Reinigungselement hin befördert wird, um die Kameraeinheit, insbesondere die Linse der Kameraeinheit, mit dem Fluid zu reinigen und/oder zu trocknen.

Bei der Verwendung von zwei unterschiedlichen Fluiden kann es sehr vorteilhaft sein, wenn die Kammer einen ersten Zulauf für ein erstes Fluid, insbesondere Luft, und einen zweiten Zulauf für ein zweites Fluid, insbesondere Wasser, aufweist sowie einen ersten Ablauf für das erste Fluid und einen zweiten Ablauf für das zweite Fluid aufweist.

Eine hervorragende Reinigung und eine direkt danach anschließend gute Trocknung der Kameraeinrichtung, insbesondere der Linse lässt sich in vorteilhafterweise erzielen, wenn das bewegliche Bauteil zwischen einer ersten Stellung, insbesondere Ruhestellung und einer zweiten Stellung, insbesondere Reinigungsstellung bewegbar ausgebildet ist, wobei bei der Bewegung von der ersten Stellung, insbesondere Ruhestellung, in die zweite Stellung, insbesondere Reinigungsstellung, das erste Fluid, insbesondere Wasser, über den zweiten Ablauf zum Reinigungselement befördert wird und über den ersten Zulauf das erste Fluid, insbesondere Luft angesaugt wird und bei der Bewegung des beweglichen Bauteils von der zweiten Stellung, insbesondere Reinigungsstellung, in die erste Stellung, insbesondere Ruhestellung, das erste Fluid über den zweiten Zulauf angesaugt wird und über den ersten Ablauf das zweite Fluid zum Reinigungselement gefördert wird. Der Energieverbrauch der Reinigungsvorrichtung, insbesondere des als Elektromotor ausgebildeten Stellglieds bzw. Aktuators, wird verringert, wenn bei der Bewegung von der ersten Stellung, insbesondere der Ruhestellung, in die zweite Stellung, insbesondere der Reinigungsstellung, ein mit dem beweglichen Bauteil verbundenes Federelement durch das Stellglied vorgespannt wird, und nach dem Entleeren der Kammer mit dem Fluid, insbesondere Wasser, das bewegliche Bauteil durch das vorgespannte Federelement selbstständig von der zweiten Stellung zurück in die erste Stellung befördert wird.

Wenn die Kameraeinheit nach Beendigung des Reinigungsvorgangs trocken und sauber sein soll, wird die Kameraeinheit zuerst mit Wasser und danach mit Luft beaufschlagt.

Die Erfindung wird anhand von zwei Ausführungsbeispielen beschrieben. Die Figuren zeigen:
- Figur 1: eine Kameraeinheit mit einer Reinigungsvorrichtung in einer perspektivischen Ansicht von vorne gemäß einer ersten Ausführungsform,
- Figur 2: die Kameraeinheit mit der Reinigungsvorrichtung in einer perspektivischen Ansicht von oben gemäß der ersten Ausführungsform,
- Figur 3: die Reinigungsvorrichtung in perspektivischer Ansicht gemäß der ersten Ausführungsform,
- Figur 4a: eine Prinzipskizze der Reinigungsvorrichtung in einer Ruhestellung gemäß der ersten Ausführungsform,
- Figur 4b: die Prinzipskizze der Reinigungsvorrichtung in einer Reinigungsstellung gemäß der ersten Ausführungsform,
- Figur 4c: die Prinzipskizze der Reinigungsvorrichtung in einer Phase von der Reinigungsstellung in die Ruhestellung gemäß der ersten Ausführungsform,
- Figur 5a: eine Prinzipskizze einer Reinigungsvorrichtung in einer Ruhestellung gemäß einer zweiten Ausführungsform,
- Figur 5b: die Prinzipskizze einer Reinigungsvorrichtung in einer Phase von der Ruhestellung in die Reinigungsstellung gemäß der zweiten Ausführungsform,
- Figur 5c: die Prinzipskizze einer Reinigungsvorrichtung in der Reinigungsstellung gemäß der zweiten Ausführungsform,
- Figur 5d: die Prinzipskizze einer Reinigungsvorrichtung in einer Phase von der Reinigungsstellung in die Ruhestellung gemäß der zweiten Ausführungsform,

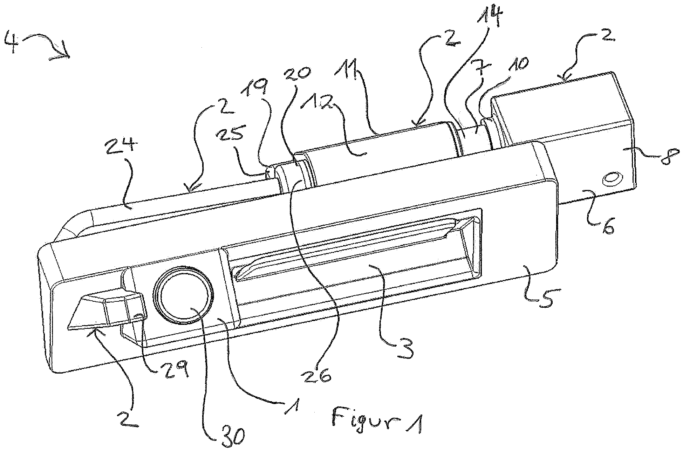

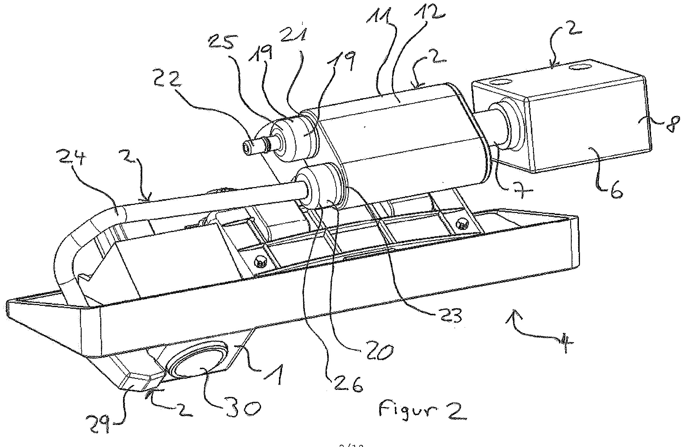

In der Figur 1 und der Figur 2 ist eine erfindungsgemäße Kameraeinheit 1 zur bildlichen Erfassung eines Außenbereichs für ein Kraftfahrzeug mit einer zum Reinigen der Kameraeinheit 1 vorgesehenen Reinigungsvorrichtung 2 visualisiert. Die Kameraeinheit 1, die Reinigungsvorrichtung 2 und ein Betätigungselement 3 bilden im vorliegenden Fall ein Kameramodul 4, wobei die Reinigungsvorrichtung 2 zumindest teilweise fest mit einem Gehäuse 5 der Kameraeinheit 1 verbunden ist, insbesondere verschraubt ist. Es ist ebenfalls denkbar, die Reinigungsvorrichtung 2 beabstandet zu der Kameraeinheit 1 anzuordnen. Es ist nicht zwingend notwendig, dass die Kameraeinheit 1 direkt mit der Reinigungsvorrichtung 2 verbunden werden muss. Es muss lediglich sichergestellt werden, dass der Abstand zwischen der Kameraeinheit 1 und der Reinigungsvorrichtung 2 derart gewählt wird, dass die Kameraeinheit 2 ausreichend gereinigt wird. Dies kann beispielsweise auch dadurch verwirklicht werden, dass die Kameraeinheit 1 und die Reinigungsvorrichtung 2 in einem als Heckleiste ausgebildeten Träger beabstandet zueinander angeordnet werden.

Die Reinigungsvorrichtung 2 umfasst ein als Elektromotor oder Aktuator ausgebildetes Stellglied 6 zum Antreiben eines als Kolben ausgeführten beweglichen Bauteils 7. Das im Wesentlichen zylinderförmige bewegliche Bauteil 7 ist zumindest teilweise innerhalb eines Stellgliedgehäuses 8 angeordnet. Dabei wird das bewegliche Bauteil 7 in einer Öffnung 9 des Stellgliedgehäuses 8 geführt und gelagert. Die Öffnung 9 des Stellgliedgehäuse 8 ist mit einem als O-Ring ausgebildeten Abdichtelement 10 ausgebildet, welches einerseits dafür dient, ein Eintreten von Feuchtigkeit in das Stellgliedgehäuse 8 zu verhindern, und andererseits dafür sorgt, dass das bewegliche Bauteil 7 klapperfrei und sicher geführt wird.

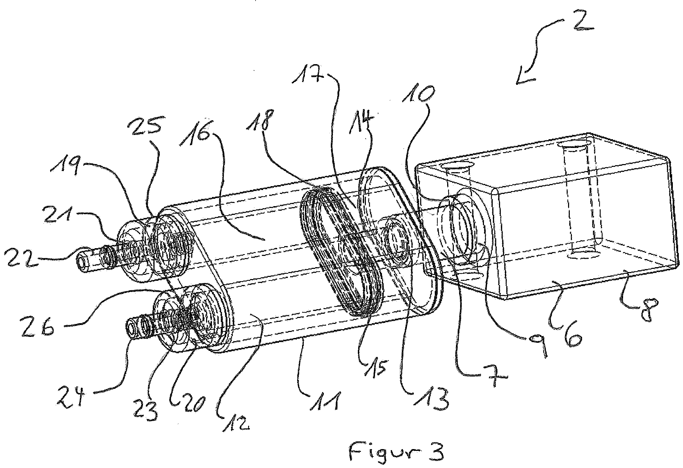

Des Weiteren umfasst die in der Figur 3 gezeigte Reinigungsvorrichtung 2 eine Kammer 11 aufweisend ein Kammergehäuse 12 mit einer Kammeröffnung 13 auf, welches zur Aufnahme und Unterbringung eines Fluids, insbesondere Wasser oder Luft, ausgebildet ist. Die Kammer 11 nimmt ebenfalls das bewegliche Bauteil 7 auf. Wie in der Figur 3 sehr gut zu erkennen ist, wird das bewegliche Bauteil 7 durch einen im Wesentlichen T-förmigen Kolben gebildet. Das bewegliche Bauteil 7 weist daher einen als Schaft zylinderförmigen Abschnitt 14 und einen mit dem zylinderförmigen Abschnitt 14 verbundenen plattenförmigen Abschnitt 15 auf. Der zylinderförmige Abschnitt 14 wird sowohl von dem Stellgliedgehäuse 8, als auch von dem Kammergehäuse 12 gelagert und geführt. Allerdings ist zwischen der Kammeröffnung 13 und dem zylinderförmigen Abschnitt 14 ein minimaler Spalt angeordnet, der es erlaubt, dass das Fluid in der Kammer 11, insbesondere Luft bei einer Bewegung des beweglichen Bauteils 7 entweichen bzw. eindringen kann. Je nach Auslegung des Stellglieds 6 kann aber auch dieser Spalt entfallen und ein weiteres Abdichtelement zwischen dem Schaft des beweglichen Bauteils 7 und der Kammeröffnung 13 vorgesehen werden.

Der plattenförmige Abschnitt 15, welcher einteilig mit dem zylinderförmigen Abschnitt 14 ausgebildet ist, wird innerhalb des Kammergehäuses 12 beweglich geführt. Während der Bewegung des beweglichen Bauteils 7 wird die Kammer durch den plattenförmigen Abschnitt 15 zumindest zeitweise in einen ersten Kammerabschnitt 16 und in einen zweiten Kammerabschnitt 17 geteilt, wie dies in der Figur 3 gezeigt ist. Zusätzlich ist der plattenförmige Abschnitt mit einem Dichtelement 18 versehen, welches verhindern soll, dass in dem ersten Kammerabschnitt 16 angeordnetes Fluid in den zweiten Kammerabschnitt 17 strömt. Das Dichtelement 18 ist dabei zwischen einer inneren Wandung des Kammergehäuses 12 und einer Wandung des beweglichen Bauteils 7, insbesondere des plattenförmigen Abschnitts 15, angeordnet und gewährleistet dadurch eine zuverlässige und kostengünstige Abdichtung. Des Weiteren ist gemäß dem ersten Ausführungsbeispiel vorgesehen, das der Kammer 11 ein Zulauf 19 und ein Ablauf 20 zugeordnet ist. Der Zulauf 19 ist an einer Zulauföffnung 21 mit einer elastisch ausgebildeten Zulaufleitung 22 verbunden. Der Ablauf 20 ist an einer Ablauföffnung 23 mit einer elastisch ausgebildeten Ablaufleitung 24 verbunden. Die Zulaufleitung 22 wird mit einem Zulaufverbindungselement 25 mit der Zulauföffnung 21 dichtend verbunden.

Ebenfalls wird die Ablaufleitung 24 mit einem Ablaufverbindungselement 26 mit der Ablauföffnung 23 dichtend verbunden. Die Zulaufleitung 22 und die Ablaufleitung 24 sind jeweils mit einem Rückschlagventil 27 bzw. 28 versehen, wobei die Zulaufleitung 22 an einen Wasserbehälter, insbesondere Wischwasserbehälter der Scheibenreinigungsanlage oder deren Leitungen angeschlossen ist, um die Wasserversorgung für die Reinigungsvorrichtung 2 sicherzustellen. Die Ablaufleitung 24 ist mit einem als feststehende Reinigungsdüse ausgebildeten Reinigungselement 29 verbunden, welches die Kameraeinheit 1, insbesondere eine Linse 30 der Kameraeinheit 1, mit einem Fluid, insbesondere Wasser und/oder Luft beaufschlagt. Das Reinigungselement 29 ist unbeweglich am Gehäuse 5 der Kameraeinheit 1 befestigt. Alternativ kann das Reinigungselement 29 aber auch durch einen Antrieb bewegt werden, um beispielsweise von einer im Gehäuse 5 geschützten Ruhestellung in eine Reinigungsstellung zum Reinigen der Linse30 bewegt zu werden.

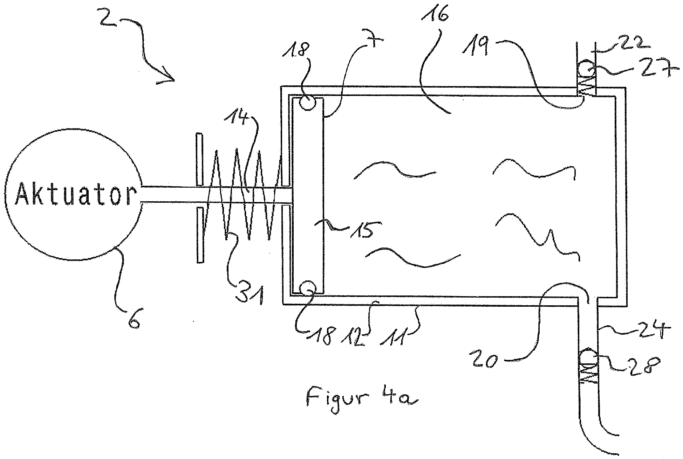

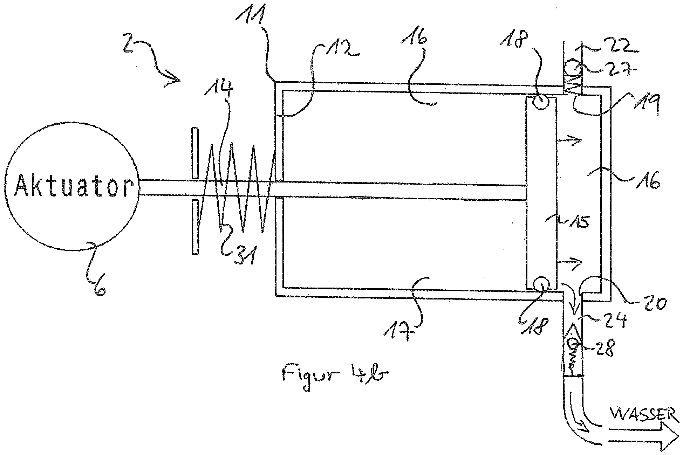

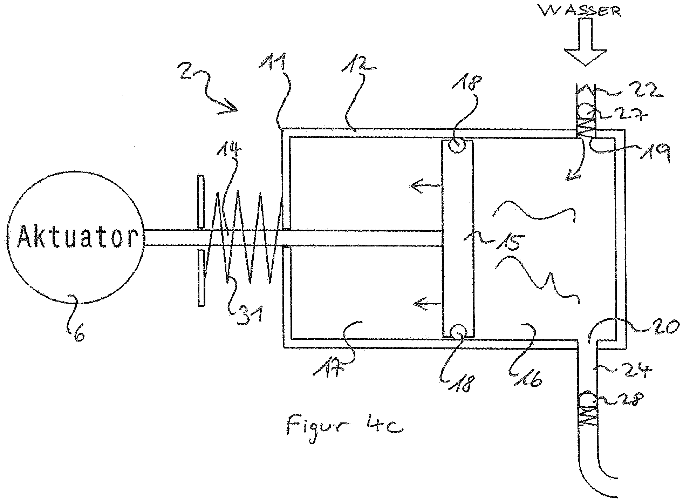

Im Folgenden wird die Funktion der Kameraeinheit 1 mit der Reinigungsvorrichtung 2 gemäß dem ersten Ausführungsbeispiel anhand der Figuren 4a, 4b und 4c beschrieben.

Wenn die Linse 30 der Kameraeinheit 1 verschmutzt ist, wird entweder manuell durch einen Benutzer oder automatisch mittels eines Sensors der Reinigungsvorgang gestartet. Grundsätzlich ist vor Beginn jedes Reinigungsvorgangs der Kameraeinheit 1 die Kammer 11 immer zumindest teilweise mit einem Fluid, insbesondere mit Wasser oder Luft befüllt.

In der Figur 4a befindet sich das bewegliche Bauteil 7 in einer Ruhestellung, wobei der erste Kammerabschnitt 16 mit Wasser befüllt ist. Um die Linse 30 der Kameraeinheit 1 zu reinigen, wird das bewegliche Bauteil 7 mittels des als Stellglied 6 ausgebildeten Aktuators in Richtung des Zulaufs 19 bzw. Ablaufs 20 bewegt. Während dieser Bewegung des beweglichen Bauteils 7 von der Ruhestellung in die Reinigungsstellung wird das in der Kammer 11 angeordnete Wasser über den Ablauf 20 in die Ablaufleitung 24 gepumpt bzw. befördert. Aufgrund des Wasserdrucks öffnet sich das Rückschlageventil 28 in der Ablaufleitung 24 und das Wasser strömt zum Reinigungselement 29, insbesondere zur Reinigungsdüse. Das mit Druck beaufschlagte Wasser strömt aus der Reinigungsdüse aus und reinigt zuverlässig und sauber die Linse 30 der Kameraeinheit 1. Während der Bewegung des beweglichen Bauteils 7 von der Ruhestellung in die Reinigungsstellung bleibt das Rückschlagventil 27 der Zulaufleitung 22 geschlossen, so dass ein Druckverlust in der Ablaufleitung 24 verhindert wird. Nachdem der Reinigungsvorgang abgeschlossen ist, wird der elektrisch betriebene Aktuator abgeschaltet und ein in den Figuren 4a bis 4c schematisch gezeigtes Federelement 31 bewegt das bewegliche Bauteil 7 von der Reinigungsstellung selbstständig zurück in die Ruhestellung. In den Figuren 1 bis 3 wurde auf das Federelement verzichtet, so dass das elektrisch betreibbare Stellglied 7 das bewegliche Bauteil von der Reinigungsstellung zurück in die Ruhestellung motorisch bewegt. Durch die Bewegung des beweglichen Bauteils 7 von der Reinigungsstellung in die Ruhestellung wird das Rückschlagventil 27 in der Ablaufleitung 24 geschlossen und es wird in der Kammer 11 ein Unterdruck erzeugt, welcher das Fluid, insbesondere das Wasser über den Zulauf 19 in die Kammer 11 ansaugt. In dieser Phase, welche in der Figur 4c dargestellt ist, wird das Rückschlageventil 27 der Zulaufleitung 22 geöffnet und sorgt für einen Eintritt von Wasser über den Zulauf 19 in die Kammer 11. Der Reinigungsvorgang ist abgeschlossen, wenn das bewegliche Bauteil 7 wieder in die Ruhestellung zurückgekehrt ist, wie es in der Figur 4a gezeigt ist.

Als Fluid für die Reinigung der Kameraeinheit 1 kann sowohl Wasser als auch Luft verwendet werden.

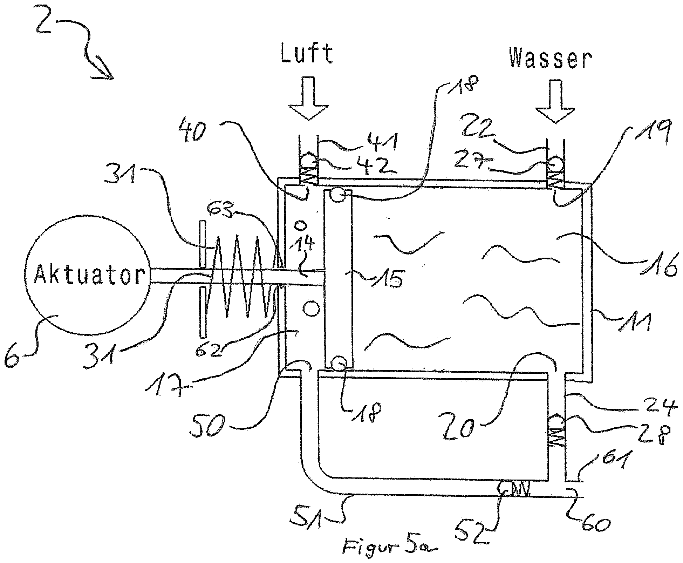

In den Figuren 5a - 5d ist eine modifizierte Reinigungsvorrichtung 2 für die Kameraeinheit 1 gemäß einer zweiten Ausführungsform offenbart, welche zusätzlich zum Reinigungsvorgang auch einen Trocknungsvorgang durchführt.

Für dieselben Bauteile werden dieselben Bezugszeichen verwendet, wie für das vorangegangen Ausführungsbeispiel. Neue konstruktive Elemente erhalten ggf. neue Bezugszeichen.

Im Unterschied zu dem Ausführungsbeispiel dargestellt in den Figuren 4a - 4c wird die Kammer 11 mit einem weiteren Zulauf 40 und einem weiteren Ablauf 50 versehen. Die Kammer 11 weist somit den ersten Zulauf 50, den zweiten Zulauf 19, den ersten Ablauf 50 und den zweiten Ablauf 20 auf. Der erste Zulauf 40 ist mit einer Zulaufleitung 41 verbunden, in welcher ein Rückschlagventil 42 angeordnet ist. Der erste Ablauf 50 ist mit einer Ablaufleitung 51 verbunden, welche mit einem Rückschlagventil 52 versehen ist. Wie bereits im vorherigen Ausführungsbeispiel, gezeigt in den Figuren 4a-4c, ist der zweite Zulauf 19 mit der Zulaufleitung 22 verbunden, in welcher das Rückschlagventil 27 angeordnet ist. Ebenfalls ist der Ablauf 20 mit der Ablaufleitung 24 verbunden, welche ein Rückschlagventil 28 aufweist.

Der erste Ablauf 50, insbesondere die erste Ablaufleitung 51 und der zweite Ablauf 20, insbesondere die zweite Ablaufleitung 24 sind hinter den jeweiligen Rückschlagventilen 28, 52 miteinander verbunden und bilden einen Gesamtablauf 60, insbesondere eine Gesamtablaufleitung 61, die mit dem Reinigungselement 29 verbunden ist. Über die Gesamtablaufleitung 61 wird das Reinigungselement 29 mit dem entsprechendem Fluid versorgt.

Wie in den Figuren 5a - 5d zu erkennen ist, dient der erste Zulauf 40 für ein erstes Fluid, insbesondere Luft, und der zweite Zulauf 19 für ein zweites Fluid, insbesondere Wasser. Der erste Ablauf 50 dient zum Ablauf für das erste Fluid, insbesondere Luft und der zweite Ablauf 20 dient für das zweite Fluid, insbesondere Wasser.

Im Folgenden wird der Reinigungsvorgang beschrieben. In der Figur 5a befindet sich das als Kolben beweglich ausgebildete Bauteil 7 in der Ruhestellung. Der erste Kammerabschnitt 16 ist mit Wasser befüllt und der zweite Kammerabschnitt 17 ist mit ein wenig Luft befüllt. Alternativ könnte der Kolben auch direkt an der Wandung der Kammer 11 anliegen. Dann müssten allerdings der erste Zulauf 40 und der erste Ablauf 50 an der Wandung der Kammer 11 angeordnet werden, an welcher der Kolben in der Ruhstellung im Wesentlichen vollständig anliegt.

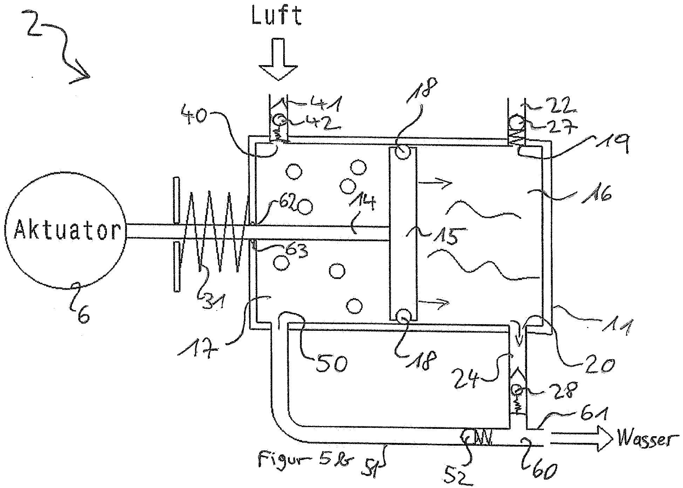

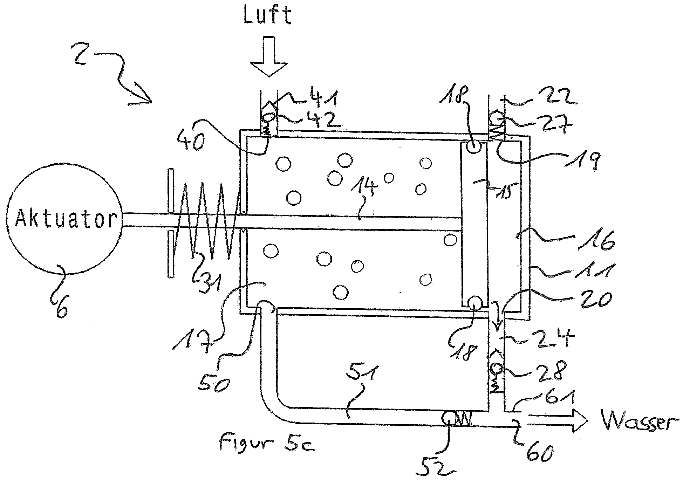

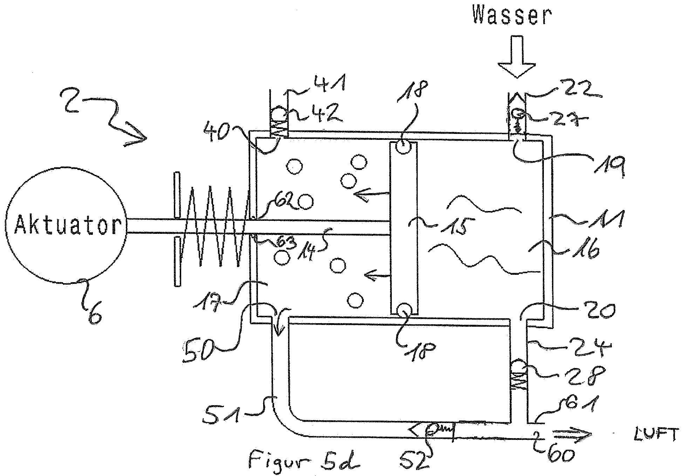

Wird nun der Reinigungsvorgang gestartet, bewegt sich das bewegliche Bauteil 7 von einer ersten Stellung, insbesondere der Ruhestellung, zu einer zweiten Stellung, insbesondere der Reinigungsstellung, wie in Figur 5b gezeigt ist. Bei der Bewegung von der ersten Stellung in die zweite Stellung wird das erste Fluid, insbesondere Wasser, über den zweiten Ablauf 20 und über die Ablaufleitung 24 zum Reinigungselement 29 befördert, bis die Kammer 11, insbesondere der erste Kammerabschnitt 16 im Wesentlichen frei von Wasser ist, wie in Figur 5c visualisiert ist. Dabei wird das Rückschlagventil 28 durch den ansteigenden Wasserdruck geöffnet, wobei gleichzeitig das Rückschlagventil 27 geschlossen bleibt. Betrachtet man den zweiten Kammerabschnitt 17, so wird dieser bei der Bewegung des beweglichen Bauteils 7 von der Ruhestellung in die Reinigungsstellung mit Luft befüllt. Dabei wird die Luft von der Umgebung über die erste Zulaufleitung 41 angesaugt. Das Rückschlagventil 42 öffnet sich und die Luft strömt in den zweiten Kammerabschnitt 17 der Kammer 11, wobei das zweite Rückschlagventil 52 geschlossen bleibt. Die Reinigungsstellung ist vollständig erreicht, wenn der erste Kammerabschnitt 16 im Wesentlichen kein Wasser mehr aufweist. Genau in diesem Augenblick ist der zweite Kammerabschnitt 17 vollständig mit Luft befüllt, wie in Figur 5c gezeigt. Nachdem die Kameraeinheit 1 mittels des Reinigungselements 29 gereinigt ist, wird über das Federelement 31 und/oder dem elektrischen Aktuator das bewegliche Bauteil 7 von der Reinigungsstellung zurück in die Ruhestellung bewegt. Während dieser Bewegung, dargestellt in der Figur 5d, wird über den zweiten Zulauf 19 das zweite Fluid, insbesondere Wasser über die zweite Zulaufleitung 22 angesaugt, wobei sich dabei das Rückschlagventil 27 aufgrund des entstehenden Unterdrucks in dem ersten Kammerabschnitt 16 öffnet. Gleichzeitig wird bei der Bewegung des beweglichen Bauteils 7 von der zweiten Stellung in die erste Stellung das erste Fluid, insbesondere Luft, über den ersten Ablauf 50 zum Reinigungselement 29 befördert. Durch den in der ersten Ablaufleitung 51 entstehenden Druck wird das Rückschlagventil 52 geöffnet und die Luft strömt über die Gesamtablaufleitung 61 zum Reinigungselement 29. Die Rückschlagventile 28 und 42 bleiben nun geschlossen. Die nach dem zuvor erfolgten Reinigungsvorgang an der Kameraeinheit 1, insbesondere an der Linse 30 angeordnete restliche Feuchtigkeit wird durch die Luft getrocknet. Wenn die Luft im Wesentlichen aus dem zweiten Kammerabschnitt 17 ausgeströmt ist, befindet sich das bewegliche Bauteil wieder in der Ruhestellung gemäß Figur 5a. Der Reinigungs- und Trocknungsvorgang ist abgeschlossen und alle Rückschlagventile 27, 28, 41, 52 der Reinigungsvorrichtung 2 sind geschlossen. Um eine Druckverlust innerhalb des zweiten Kammerabschnitts 17 zu verhindern, ist eine Durchgangsöffnung 62 für das bewegliche Bauteil 7 mit einem Dichtelement 63 versehen, welches ein Einströmen von Luft aus der Umgebung in die Kammer 11 verhindert.

In den Figuren 4a-4c und 5a-5d ist das Fluid Wasser mit Hilfe von Wellen dargestellt und das Fluid Luft mit rundförmigen Bläschen visualisiert.

### Bezugszeichenliste

- 1: Kameraeinheit
- 2: Reinigungsvorrichtung
- 3: Betätigungselement
- 4: Kameramodul
- 5: Gehäuse der Kameraeinheit 1
- 6: Stellglied
- 7: bewegliches Bauteil
- 8: Stellgliedgehäuses
- 9: Öffnung des Stellgliedgehäuses 8
- 10: Abdichtelement des Stellgliedgehäuses 8
- 11: Kammer
- 12: Kammergehäuse
- 13: Kammeröffnung
- 14: Zylinderförmige Abschnitt
- 15: plattenförmiger Abschnitt
- 16: erster Kammerabschnitt
- 17: zweiter Kammerabschnitt
- 18: Dichtelement des beweglichen Stellglieds 8
- 19: Zulauf
- 20: Ablauf
- 21: Zulauföffnung
- 22: Zulaufleitung
- 23: Ablauföffnung
- 24: Ablaufleitung
- 25: Zulaufverbindungselement
- 26: Ablaufverbindungselement
- 27: Rückschlagventil der Zulaufleitung 22
- 28: Rückschlagventil der Ablaufleitung 24
- 29: Reinigungselement
- 30: Linse der Kameraeinheit 1
- 31: Federelement
- 40: erster Zulauf
- 41: erste Zulaufleitung
- 42: Rückschlagventil
- 50: erster Ablauf
- 51: erste Ablaufleitung
- 52: Rückschlagventil
- 60: Gesamtablauf
- 61: Gesamtablaufleitung
- 62: Durchgangsöffnung
- 63: Dichtelement der Durchgangsöffnung 62

## Patentansprüche

1. Kameraeinheit (1) zur bildlichen Erfassung eines Außenbereichs für ein Kraftfahrzeug mit einer zum Reinigen der Kameraeinheit (1) vorgesehenen Reinigungsvorrichtung (2),
**dadurch gekennzeichnet, dass**
die Reinigungsvorrichtung (2) umfasst:
- ein Stellglied (6) zum Antreiben eines beweglichen Bauteils (7), insbesondere eines Kolbens,
- eine Kammer (11) zur Aufnahme des beweglichen Bauteils (7), wobei der Kammer (11) mindestens ein Zulauf (19, 40) und mindestens ein Ablauf (20, 50) zugeordnet ist, welcher jeweils mit einem Rückschlagventil (27, 28, 42, 52) versehen ist,
- eine mit mindestens einem Ablauf (20) verbundenes Reinigungselement (29), insbesondere Reinigungsdüse, zur Beaufschlagung der Kameraeinheit (1) mit einem Fluid,
wobei durch die Bewegung des beweglichen Bauteils (7) das Fluid von dem Zulauf (19) zu dem Ablauf (20) befördert ist, um die Kameraeinheit (1) mit dem Reinigungselement (29) zu reinigen.

2. Kameraeinheit (1) nach Anspruch 1, **dadurch gekennzeichnet, dass** durch die Bewegung des beweglichen Bauteils (7) in der Kammer ein Unterdruck erzeugbar ist, welcher das Fluid über mindestens einen Zulauf (19) in die Kammer (11) ansaugt und bei einer nachfolgenden Bewegung des beweglichen Bauteils (7) das Fluid aus der Kammer (11) über den Ablauf (20) zu dem Reinigungselement (29) gefördert wird, um die Kameraeinheit (11), insbesondere eine Linse (30) der Kameraeinheit, mit dem Fluid zu beaufschlagen.

3. Kameraeinheit (1) nach Anspruch 1 oder 2, **dadurch gekennzeichnet, dass** das Stellglied (6) als Elektromotor oder Aktuator ausgebildet ist.

4. Kameraeinheit (1) nach einem der Ansprüche 1 bis 3, **dadurch gekennzeichnet, dass** die Reinigungsvorrichtung (2) mit der Kameraeinheit (1) verbunden, insbesondere verschraubt ist.

5. Kameraeinheit (1) nach einem der Ansprüche 1 bis 4, **dadurch gekennzeichnet, dass** das Reinigungselement (29) unbeweglich an einem Gehäuse (5) der Kameraeinheit (1) angeordnet ist.

6. Kameraeinheit (1) nach einem der Ansprüche 1 bis 4, **dadurch gekennzeichnet, dass** das Reinigungselement (29) durch einen Antrieb verfahrbar ausgebildet ist.

7. Kameraeinheit (1) nach einem der Ansprüche 1 bis 6, **dadurch gekennzeichnet, dass** die Kammer (11) einen ersten Zulauf (40) für ein erstes Fluid, insbesondere Luft, und einen zweiten Zulauf (19) für ein zweites Fluid, insbesondere Wasser, aufweist sowie einen ersten Ablauf (50) für das erste Fluid und einen zweiten Ablauf (20) für das zweite Fluid aufweist.

8. Kameraeinheit (1) nach Anspruch 7, **dadurch gekennzeichnet, dass** das bewegliche Bauteil (7) zwischen einer ersten Stellung, insbesondere Ruhestellung, und einer zweiten Stellung, insbesondere Reinigungsstellung, bewegbar ausgebildet ist, wobei bei der Bewegung von der ersten Stellung in die zweite Stellung das erste Fluid, insbesondere Wasser, über den zweiten Ablauf (20) zum Reinigungselement (29) beförderbar ist und über den ersten Zulauf (40) das zweite Fluid, insbesondere Luft, ansaugbar ist und bei der Bewegung des beweglichen Bauteils (7) von der zweiten Stellung in die erste Stellung das erste Fluid, insbesondere Wasser, über den zweiten Zulauf (19) ansaugbar ist und über den ersten Ablauf (50) das zweite Fluid, insbesondere Luft, zum Reinigungselement (29) beförderbar ist, um die Kameraeinheit (1), insbesondere die Linse (30) zu trocknen.

9. Kameraeinheit (1) nach Anspruch 7 oder 8, **dadurch gekennzeichnet, dass** der erste Ablauf (50), insbesondere eine erste Ablaufleitung (51) aufweist und der zweite Ablauf (20), insbesondere eine zweite Ablaufleitung (24) aufweist, wobei die erste Ablaufleitung (51) und die zweite Ablaufleitung (24) hinter den jeweiligen Rückschlagventilen (28, 52) miteinander verbunden sind und einen Gesamtablauf (60), insbesondere Gesamtablaufleitung (61), bilden, der mit dem Reinigungselement (29) verbunden ist.

10. Kameraeinheit (1) nach Anspruch 9, **dadurch gekennzeichnet, dass** die Zulaufleitung (41, 22) und/oder die Ablaufleitung (24, 51) und/oder der Ablauf (20, 50) und/oder der Zulauf (19, 40) aus einem elastischen Material ausgebildet sind.

11. Kameraeinheit (1) nach einem der Ansprüche 1 bis 10, **dadurch gekennzeichnet, dass** vor Beginn des Reinigungsvorgangs der Kameraeinheit (1) die Kammer (11) immer zumindest teilweise mit Wasser befüllt ist.

12. Kameraeinheit (1) nach einem der Ansprüche 1 bis 11, **dadurch gekennzeichnet, dass** das bewegliche Bauteil (7) mit einem Dichtelement (18) versehen ist, wobei das Dichtelement zwischen einer inneren Wandung der Kammer (11) und einer Wandung des beweglichen Bauteils (7) angeordnet ist.

13. Kameraeinheit (1) nach einem der Ansprüche 1 bis 12, **dadurch gekennzeichnet, dass** das beweglich Bauteil (7) mit einem Federelement (31) verbunden ist, um das beweglich Bauteil (7) selbstständig durch das vorgespannte Federelement (31) von der zweiten Stellung, insbesondere Reinigungsstellung, zurück in die erste Stellung, insbesondere Ruhestellung, zu bewegen.

14. Verfahren zum Reinigen einer Kameraeinheit (1) zur bildlichen Erfassung eines Außenbereichs für ein Kraftfahrzeug, wobei der Kameraeinheit (1) eine Reinigungsvorrichtung (2) mit einem Reinigungselement (29) zugeordnet ist, welche zur Reinigung der Kameraeinheit (1) mit einem Fluid dient, wobei die Reinigungsvorrichtung (2) ein Stellglied (6) aufweist, welches ein bewegliches Bauteil (7), insbesondere einen Kolben, innerhalb einer mit mindestens einem Zulauf (19, 40) und mindestens einem Ablauf (20, 50) ausgebildeten Kammer (11) der Reinigungsvorrichtung (2) bewegt, wobei durch die Bewegung des beweglichen Bauteils (7) das Fluid von dem Zulauf (19, 40) zu dem Ablauf (20, 50) bewegt wird, um die Kameraeinheit (1) mit dem Reinigungselement (7) zu reinigen und/oder zu trocknen.

15. Verfahren zum Reinigen der Kameraeinheit (1) nach Anspruch 14, **dadurch gekennzeichnet, dass** bei der Bewegung des beweglichen Bauteils (7) ein Fluid über den Zulauf (19, 40) angesaugt wird und bei einer zweiten Bewegung über den Ablauf (20, 50) zu dem Reinigungselement (29) hin befördert wird, um die Kameraeinheit (1), insbesondere die Linse (30) der Kameraeinheit, mit dem Fluid zu reinigen und/oder zu trocknen.

16. Verfahren zum Reinigen der Kameraeinheit (1) nach Anspruch 14 oder 15, **dadurch gekennzeichnet, dass** die Kammer (11) einen ersten Zulauf (40) für ein erstes Fluid, insbesondere Luft, und einen zweiten Zulauf (19) für ein zweites Fluid, insbesondere Wasser, aufweist sowie einen ersten Ablauf (50) für das erste Fluid und einen zweiten Ablauf (20) für das zweite Fluid aufweist.

17. Verfahren zum Reinigen der Kameraeinheit (1) nach Anspruch 16, **dadurch gekennzeichnet, dass** das bewegliche Bauteil (7) zwischen einer ersten Stellung, insbesondere Ruhestellung und einer zweiten Stellung, insbesondere Reinigungsstellung bewegbar ausgebildet ist, wobei bei der Bewegung von der ersten Stellung, insbesondere Ruhestellung, in die zweite Stellung, insbesondere Reinigungsstellung, das erste Fluid, insbesondere Wasser, über den zweiten Ablauf (20) zum Reinigungselement (29) befördert wird und über den ersten Zulauf (40) das erste Fluid, insbesondere Luft angesaugt wird und bei der Bewegung des beweglichen Bauteils (7) von der zweiten Stellung, insbesondere Reinigungsstellung, in die erste Stellung, insbesondere Ruhestellung, das erste Fluid über den zweiten Zulauf (19) angesaugt wird und über den ersten Ablauf (50) das zweite Fluid zum Reinigungselement (29) gefördert wird.

18. Verfahren zum Reinigen der Kameraeinheit (1) nach einem der Ansprüche 14 bis 17, **dadurch gekennzeichnet, dass** bei der Bewegung von der ersten Stellung, insbesondere der Ruhestellung, in die zweite Stellung, insbesondere der Reinigungsstellung, ein mit dem beweglichen Bauteil (7) verbundenes Federelement (31) durch das Stellglied (6) vorgespannt wird, und nach dem Entleeren der Kammer (11) mit dem Fluid, insbesondere Wasser, das bewegliche Bauteil (7) durch das vorgespannte Federelement (31) selbstständig von der zweiten Stellung zurück in die erste Stellung befördert wird.

19. Verfahren zum Reinigen der Kameraeinheit (1) nach einem der Ansprüche 16 bis 18, **dadurch gekennzeichnet, dass** die Kameraeinheit (1) zuerst mit Wasser und danach mit Luft beaufschlagt wird.

20. Reinigungsvorrichtung (2) mit einer Kameraeinheit (1) nach einem der Ansprüche 1 bis 13.

21. Kameramodul (4) mit einer Reinigungsvorrichtung (2) und/oder einer Kameraeinheit (1) nach einem der Ansprüche 1 bis 20.

## Claims

1. A camera unit (1) for capturing images of an external region for a motor vehicle with a cleaning device (2) provided for cleaning the camera unit (1), **characterised in that**
the cleaning device (2) comprises:
- an actuating element (6) for driving a mobile component (7), in particular a plunger,
- a chamber (11) for receiving the mobile component (7), wherein at least one supply (19, 40) and at least one discharge (20, 50) are assigned to the chamber (11), which discharge is provided in each case with a non-return valve (27, 28, 42, 52),
- a cleaning element (29), for example a cleaning nozzle, connected to at least one discharge (20), for applying a fluid to the camera unit (1),
wherein the fluid is conveyed from the supply (19) to the discharge (20) by the movement of the mobile component (7) in order to clean the camera unit (1) with the cleaning element (29).

2. The camera unit (1) according to claim 1, **characterised in that** an underpressure can be generated in the chamber due to the movement of the mobile component (7), which underpressure sucks the fluid via at least one supply (19) into the chamber (11) and, with a subsequent movement of the mobile component (7), the fluid is conveyed out of the chamber (11) via the discharge (20) to the cleaning element (29), in order to apply the fluid to the camera unit (11), in particular a lens (30) of the camera unit.

3. The camera unit (1) according to claim 1 or 2, **characterised in that** the actuating element (6) is constituted as an electric motor or an actuator.

4. The camera unit (1) according to any one of claims 1 to 3, **characterised in that** the cleaning device (2) is connected, in particular screwed, to the camera unit (1).

5. The camera unit (1) according to any one of claims 1 to 4, **characterised in that** the cleaning element (29) is arranged immobile on a housing (5) of the camera unit (1).

6. The camera unit (1) according to any one of claims 1 to 4, **characterised in that** the cleaning element (29) is constituted traversable by means of a drive.

7. The camera unit (1) according to any one of claims 1 to 6, **characterised in that** the chamber (11) comprises a first supply (40) for a first fluid, in particular air, and a second supply (19) for a second fluid, in particular water, and comprises a first discharge (50) for the first fluid and a second discharge (20) for the second fluid.

8. The camera unit (1) according to claim 7, **characterised in that** the mobile component (7) is constituted mobile between a first position, in particular a rest position, and a second position, in particular a cleaning position, wherein, during the movement from the first position into the second position, the first fluid, in particular water, can be conveyed via the second discharge (20) to the cleaning element (29) and the second fluid, in particular air, can be sucked via the first supply (40) and, during the movement of the mobile component (7) from the second position into the first position, the first fluid, in particular water, can be sucked via the second supply (19) and the second fluid, in particular air, can be conveyed via the first discharge (50) to the cleaning element (29), in order to dry the camera unit (1), in particular the lens (30).

9. The camera unit (1) according to claim 7 or 8, **characterised in that** the first discharge (50) comprises in particular a first discharge line (51) and the second discharge (20) comprises in particular a second discharge line (24), wherein the first discharge line (51) and the second discharge line (24) are connected to one another behind the respective non-return valves (28, 52) and form an overall discharge (60), in particular an overall discharge line (61), which is connected to the cleaning element (29).

10. The camera unit (1) according to claim 9, **characterised in that** the supply line (41, 22) and/or the discharge line (24, 51) and/or the discharge (20, 50) and/or the supply (19, 40) are made from an elastic material.

11. The camera unit (1) according to any one of claims 1 to 10, **characterised in that** the chamber (11) is always filled at least partially with water before the start of the cleaning process of the camera unit (1).

12. The camera unit (1) according to any one of claims 1 to 11, **characterised in that** the mobile component (7) is provided with a sealing element (18), wherein the sealing element is arranged between an inner wall of the chamber (11) and a wall of the mobile component (7).

13. The camera unit (1) according to any one of claims 1 to 12, **characterised in that** the mobile component (7) is connected to a spring element (31) in order to move the mobile component (7) automatically by the pretensioned spring element (31) from the second position, in particular the cleaning position, back into the first position, in particular the rest position.

14. A method for cleaning a camera unit (1) for capturing images of an external region for a motor vehicle, wherein a cleaning device (2) with a cleaning element (29) is assigned to the camera unit (1), which cleaning element is used for cleaning the camera unit (1) with a fluid, wherein the cleaning device (2) comprises an actuating element (6), which moves a mobile component (7), in particular a plunger, inside a chamber (11) of the cleaning device (2) constituted with at least one supply (19, 40) and at least one discharge (20, 50), wherein the fluid is moved from the supply (19, 40) to the discharge (20, 50) by the movement of the mobile component (7) in order to clean and/or to dry the camera unit (1) with the cleaning element (7).

15. The method for cleaning the camera unit (1) according to claim 14, **characterised in that**, during the movement of the mobile component (7), a fluid is sucked via the supply (19, 40) and, during a second movement, is conveyed by the discharge (20, 50) to the cleaning element (29), in order to clean and/or dry the camera unit (1), in particular the lens (30) of the camera unit, with the fluid.

16. The method for cleaning the camera unit (1) according to claim 14 or 15, **characterised in that** the chamber (11) comprises a first supply (40) for a first fluid, in particular air, and a second supply (19) for a second fluid, in particular water, and comprises a first discharge (50) for the first fluid and a second discharge (20) for the second fluid.

17. The method for cleaning the camera unit (1) according to claim 16, **characterised in that** the mobile component (7) is constituted mobile between a first position, in particular a rest position, and a second position, in particular a cleaning position, wherein, during the movement from the first position, in particular the rest position, into the second position, in particular the cleaning position, the first fluid, in particular water, is conveyed via the second discharge (20) to the cleaning element (29) and the first fluid, in particular air, is sucked via the first supply (40) and, during the movement of the mobile component (7) from the second position, in particular the cleaning position, into the first position, in particular the rest position, the first fluid is sucked via the second supply (19) and the second fluid is conveyed to the cleaning element (29) via the first discharge (50).

18. The method for cleaning the camera unit (1) according to any one of claims 14 to 17, **characterised in that**, during the movement from the first position, in particular the rest position, into the second position, in particular the cleaning position, a spring element (31) connected to the mobile component (7) is pretensioned by the actuating element (6), and the mobile component (7) is automatically conveyed by the pretensioned spring element (31) from the second position back into the first position after the emptying of the chamber (11) with the fluid, in particular water.

19. The method for cleaning the camera unit (1) according to any one of claims 16 to 18, **characterised in that** first water and then air is applied to the camera unit (1).

20. A cleaning device (2) with a camera unit (1) according to any one of claims 1 to 13.

21. A camera module (4) with a cleaning device (2) and/or a camera unit (1) according to any one of claims 1 to 20.

## Revendications

1. Unité de caméra (1) pour la détection visuelle d'une zone extérieure pour un véhicule automobile, avec un dispositif de nettoyage (2) prévu pour nettoyer l'unité de caméra (1)
**caractérisée en ce que**
le dispositif de nettoyage (2) comprend :
- un organe de réglage (6) destiné à entraîner un élément (7) mobile, notamment un piston,
- un compartiment (11) destiné à recevoir l'élément mobile (7), au compartiment (11) étant associées au moins une alimentation (19, 40) et au moins une évacuation (20, 50), dont chacune est munie d'un clapet antiretour (27, 28, 42, 52),
- un élément de nettoyage (29) relié avec au moins une évacuation (20), notamment une buse de nettoyage, pour soumettre l'unité de caméra (1) à un fluide,
par le déplacement de l'élément mobile (7), le fluide étant convoyé de l'alimentation (19) vers l'évacuation (20), pour nettoyer l'unité de caméra (1) avec l'élément de nettoyage (29).

2. Unité de caméra (1) selon la revendication 1, **caractérisée en ce que**, par le déplacement de l'élément mobile (7) dans le compartiment, il est possible de créer une dépression, laquelle aspire le fluide dans le compartiment (11) par l'intermédiaire d'au moins une alimentation (19) et lors d'un déplacement successif de l'élément mobile (7), le fluide est convoyé hors du compartiment (11), par l'intermédiaire de l'évacuation (20) vers l'élément de nettoyage (29), pour soumettre au fluide l'unité de caméra (11), notamment une lentille (30) de l'unité de caméra.

3. Unité de caméra (1) selon la revendication 1 ou la revendication 2, **caractérisée en ce que** l'organe de réglage (6) est conçu en tant que moteur électrique ou en tant qu'actionneur.

4. Unité de caméra (1) selon l'une quelconque des revendications 1 à 3, **caractérisée en ce que** le dispositif de nettoyage (2) est relié, notamment boulonné avec l'unité de caméra (1).

5. Unité de caméra (1) selon l'une quelconque des revendications 1 à 4, **caractérisée en ce que** l'élément de nettoyage (29) est placé de manière immobile sur un boîtier (5) de l'unité de caméra (1).

6. Unité de caméra (1) selon l'une quelconque des revendications 1 à 4, **caractérisée en ce que** l'élément de nettoyage (29) est conçu en étant déplaçable par un entraînement.

7. Unité de caméra (1) selon l'une quelconque des revendications 1 à 6, **caractérisée en ce que** le compartiment (11) comporte une première alimentation (40) pour un premier fluide, notamment de l'air et une deuxième alimentation (19) pour un deuxième fluide, notamment de l'eau, ainsi qu'une première évacuation (50) pour le premier fluide et une deuxième évacuation (20) pour le deuxième fluide.

8. Unité de caméra (1) selon la revendication 7, **caractérisée en ce que** l'élément mobile (7) est conçu en étant mobile entre une première position, notamment une position de repos et une deuxième position, notamment une position de nettoyage, lors du déplacement de la première position dans la deuxième position, le premier fluide, notamment de l'eau pouvant être convoyé par l'intermédiaire de la deuxième évacuation (20) vers l'élément de nettoyage (29) et par l'intermédiaire de la première alimentation (40), le deuxième fluide, notamment de l'air pouvant être aspiré et lors du déplacement de l'élément mobile (7) de la deuxième position dans la première position, le premier fluide, notamment de l'eau pouvant être aspiré par l'intermédiaire de la deuxième alimentation (19) et par l'intermédiaire de la première évacuation (50), le deuxième fluide, notamment de l'air pouvant être convoyé vers l'élément de nettoyage (29), pour sécher l'unité de caméra (1), notamment la lentille (30).

9. Unité de caméra (1) selon la revendication 7 ou la revendication 8, **caractérisée en ce que** la première évacuation (50) comporte notamment un premier conduit d'évacuation (51) et la deuxième évacuation (20) comporte notamment un deuxième conduit d'évacuation (24) le premier conduit d'évacuation (51) et le deuxième conduit d'évacuation (24) étant reliés l'un à l'autre derrière les clapets antiretour (28, 52) respectifs et formant une évacuation globale (60), notamment un conduit d'évacuation global (61) qui est relié avec l'élément de nettoyage (29).

10. Unité de caméra (1) selon la revendication 9, **caractérisée en ce que** le conduit d'alimentation (41, 22) et/ou le conduit d'évacuation (24, 51) et/ou l'évacuation (20, 50) et/ou l'alimentation (19, 40) sont conçus dans une matière élastique.

11. Unité de caméra (1) selon l'une quelconque des revendications 1 à 10, **caractérisée en ce qu'**avant le début de l'opération de nettoyage de l'unité de caméra (1), le compartiment (11) est toujours rempli au moins partiellement d'eau.

12. Unité de caméra (1) selon l'une quelconque des revendications 1 à 11, **caractérisée en ce que** l'élément mobile (7) est muni d'un élément d'étanchéité (18), l'élément d'étanchéité étant placé entre une paroi intérieure du compartiment (11) et une paroi de l'élément mobile (7).

13. Unité de caméra (1) selon l'une quelconque des revendications 1 à 12, **caractérisée en ce que** l'élément mobile (7) est relié avec un élément à ressort (31), pour déplacer de manière autonome l'élément mobile (7) par l'élément à ressort (31) précontraint de la deuxième position, notamment la position de nettoyage, en retour dans la première position, notamment la position de repos.

14. Procédé destiné à nettoyer une unité de caméra (1) pour la détection visuelle d'une zone extérieure pour un véhicule automobile, à l'unité de caméra (1) étant associé un dispositif de nettoyage (2) avec un élément de nettoyage (29), lequel sert à nettoyer l'unité de caméra (1) avec un fluide, le dispositif de nettoyage (2) comportant un organe de réglage (6), lequel déplace un élément mobile (7), notamment un piston à l'intérieur d'un compartiment (11) du dispositif de nettoyage (2) conçu avec au moins une alimentation (19, 40) et au moins une évacuation (20, 50), par le déplacement de l'élément mobile (7), le fluide étant déplacé de l'alimentation (19, 40) vers l'évacuation (20, 50) pour nettoyer et/ou pour sécher l'unité de caméra (1) avec l'élément de nettoyage (7).

15. Procédé destiné à nettoyer l'unité de caméra (1) selon la revendication 14, **caractérisé en ce que** lors du déplacement de l'élément mobile (7), un fluide est aspiré par l'intermédiaire de l'alimentation (19, 40) et lors d'un deuxième déplacement, est convoyé vers l'élément de nettoyage (29) par l'intermédiaire de l'évacuation (20, 50) pour nettoyer et/ou pour sécher l'unité de caméra (1), notamment la lentille (30) de l'unité de caméra avec le fluide.

16. Procédé destiné à nettoyer l'unité de caméra (1) selon la revendication 14 ou la revendication 15, **caractérisé en ce que** le compartiment (11) comporte une première alimentation (40) pour un premier fluide, notamment de l'air et une deuxième alimentation (19) pour un deuxième fluide, notamment de l'eau, ainsi qu'une première évacuation (50) pour le premier fluide et une deuxième évacuation (20) pour le deuxième fluide.

17. Procédé destiné à nettoyer l'unité de caméra (1) selon la revendication 16, **caractérisé en ce que** l'élément mobile (7) est conçu en étant mobile entre une première position, notamment la position de repos et une deuxième position, notamment la position de nettoyage, lors du déplacement de la première position, notamment la position de repos dans la deuxième position, notamment la position de nettoyage, le premier fluide, notamment de l'eau étant convoyé par l'intermédiaire de la deuxième évacuation (20) vers l'élément de nettoyage (29) et par l'intermédiaire de la première alimentation (40), le premier fluide, notamment de l'air étant aspiré et lors du déplacement de l'élément mobile (7) de la deuxième position, notamment la position de nettoyage dans la première position, notamment la position de repos, le premier fluide étant aspiré par l'intermédiaire de la deuxième alimentation (19) et par l'intermédiaire de la première évacuation (50), le deuxième fluide étant convoyé vers l'élément de nettoyage (29).

18. Procédé destiné à nettoyer l'unité de caméra (1) selon l'une quelconque des revendications 14 à 17, **caractérisé en ce que** lors du déplacement de la première position, notamment la position de repos dans la deuxième position, notamment la position de nettoyage, un élément à ressort (31) relié avec l'élément mobile (7) est précontraint par l'organe de réglage (6) et après la vidange du compartiment (11) avec le fluide, notamment de l'eau, l'élément mobile (7) est convoyé automatiquement par l'élément à ressort (31) précontraint de la deuxième position en retour dans la première position.

19. Procédé destiné à nettoyer l'unité de caméra (1) selon l'une quelconque des revendications 16 à 18, **caractérisé en ce que** l'unité de caméra (1) est d'abord soumise à de l'eau et ensuite à de l'air.

20. Dispositif de nettoyage (2) avec une unité de caméra (1) selon l'une quelconque des revendications 1 à 13.

21. Module de caméra (4) avec un dispositif de nettoyage (2) et/ou avec une unité de caméra (1) selon l'une quelconque des revendications 1 à 20.
